# EUROPEAN PATENT APPLICATION

(11) **EP 2 251 770 A2**
(43) Date of publication of application: **17.11.2010**
(21) Application number: 09716765.4
(22) Date of filing: 06.03.2009
(51) Int. Cl.: G06F 3/02

(54) **DATA INPUT DEVICE**

(30) Priority: 06.03.2008 KR 20080021174
(71) Applicant: OH, Eui-Jin, Daejeon 301-150 (KR)
(72) Inventor: OH, Eui-Jin, Daejeon 301-150 (KR)
(74) Representative: Thacker, Darran Ainsley
(86) International application number: PCT/KR2009/001140
(87) International publication number: WO 2009/110769

(57) **Abstract**

There is provided a data input device. The data input device comprises a plurality of sensing units having sensors, a plurality of direction indicating positions and direction inputs in an input radius spaced and arranged from a center position in a radial direction in a uniform range in one input unit, and a controller so that data are input by continuously performing at least two direction inputs. Therefore, the input unit of a portable electronic apparatus having a narrow input space sequentially performs a plurality of movement combinations in accordance with the movements corresponding to first to sixth direction inputs from a reference position in a radial direction to minimize an input space and to rapidly and correctly input desired characters by a series of input operations.

## Description

### Background of the Invention

### 1. Field of the Invention

The present invention relates to a data input device, and more particularly, to a data input device realized in the touch pad or the touch screen of a portable electronic apparatus and comprising a plurality of sensing units having sensors, a plurality of direction indicating positions and direction inputs in an input radius spaced and arranged from a center position in a radial direction in a uniform range in one input unit, and a controller to continuously perform no less than two direction inputs and to input data.

### 2. Description of the Related Art

Recently, portable information apparatuses tend to be made small due to the developments of softwares, semiconductors, and information processing technologies. Accordingly, the character input methods and the constitutions of various apparatuses become important.

An input apparatus such as a keyboard used for a personal computer (PC) or a laptop prevents the portable information apparatuses from being made small. A touch screen method used for personal digital assistants (PDA) and a keypad method used for mobile telephones have low input speed and many erroneous inputs.

In the portable information apparatuses, in order to input characters, symbols, and numbers at higher speed, it is necessary that one phoneme (character) be input by performing an input operation once.

When such an input system is applied to Hangeul, buttons or input keys for inputting no less than 24 characters need to be arranged in a portable information apparatus.

In addition, as a portable terminal becomes like a PC, various commands other than characters are to be easily input in the portable terminal. In conventional portable information apparatuses, characters are assigned to input keys, respectively, and the characters are input by knocking or pressing the input keys by fingers. It is difficult to arrange no less than 24 finger-sized input keys in a portable terminal such as a mobile telephone in which an input key arrangement space is relatively small.

In particular, in the case of the mobile telephone, since no less than 24 Hangeul characters are commonly input by 12 buttons, a plurality of characters are inevitably arranged in one button. Therefore, one character (phoneme) is frequently input by two or three operations. As a result, input time increases and many erroneous inputs are generated.

In order to solve the above problems, in the case of inputting Hangeul, a character input method in which predetermined characters are combined with each other to be input such as 'Cheon Ji In' was suggested.

However, in this case, since basic characters are combined with each other to generate a desired character, it is possible to reduce the number of input buttons to which characters are assigned. However, since input buttons are to be repeatedly pressed until a desired character is obtained, input time increases.

In addition, technologies such as a keyboard that can be rolled to be portable and a virtual laser keyboard in which, when the image of a keyboard is projected onto a floor and an operation is performed as if an input is made to the keyboard by fingers, the positions of the fingers are sensed so that an input is performed were suggested.

However, since such input apparatuses are to be always carried and inputs can be made only when the input apparatuses are put on the floor, the input apparatuses cannot be applied to the portable information terminals that are to be carried by hands to make inputs during movement.

### Brief Summary of the Invention

The present invention has been made to provide a data input device, in which the input unit of a portable electronic apparatus having a narrow input space sequentially performs a plurality of movement combinations in accordance with the movements corresponding to first to sixth direction inputs from a reference position in a radial direction, to minimize an input space and to rapidly and correctly input desired characters by a series of input operations.

The present invention has also been made to provide a data input device capable of combining a plurality of direction inputs in a radial direction to be used for various applicable fields such as 3D graphic and map works.

In order to achieve the foregoing and/or other aspects of the present invention, there is provided a data input device realized in a touch pad or a touch screen of a portable electronic apparatus,

A data input device realized in a touch pad or a touch screen of a portable electronic apparatus, comprising: a base; an input region provided in a part of the base; a memory unit for storing a data list in order to generate data to correspond to contact and movement operations of a finger in the input region; and a controller for extracting corresponding data from the data list in the memory unit in accordance with an input signal in an input unit, wherein, in the input region, at least two inputs among a first direction input of pressing one of a plurality of first direction indicating positions spaced and arranged in a radial direction from a reference position, a second direction input of moving to one of a plurality of second direction indicating positions spaced and arranged in a radial direction from the reference position, a third direction input of pressing one of a plurality of third direction indicating positions spaced and arranged in a radial direction from the reference position in a state where a finger contacts the input region, and a fourth direction input of making inclination toward one of a plurality of fourth direction indicating positions spaced and arranged in a radial direction from the reference position in a state where the finger contacts the input region can be independently or sequentially performed, wherein the data input device further comprises a sensing unit for respectively sensing the at least two direction inputs to transmit the sensing signal to the controller, and wherein the at least two direction inputs are combined to input data.

A combination of the first direction input and the second direction input is performed.

A combination of the second direction input and the third direction input is performed.

A combination of the second direction input and the fourth direction input is performed.

A combination of the first direction input and the third direction input is performed.

A combination of the first direction input and the fourth direction input is performed.

A combination of the third direction input and the fourth direction input is performed.

On the other hand, the data input device further includes a character-board display unit on which data to be input is displayed in accordance with the direction input in the input region.

When a uniform direction input is performed, at the point where the direction input is completed, using the completion point as a reference position, the character-board display unit is re-activated (displayed) so that one of the first to fourth direction inputs can be continuously performed.

The radial input region of forming an input radius is formed of two to eight directions around a reference position in a radial direction.

When one of the first to fourth direction inputs is performed, a constitution of a character-board display unit can be changed in accordance with a change in movement distance, a change in pressure strength, and a change in pressure displacement so that a multi-step input can be performed.

A character-board display unit for displaying an English word or a Hangeul word having a high use frequency is formed in accordance with continuously inputting character arrangement.

According to the present invention, the input unit of a portable electronic apparatus having a narrow input space sequentially performs a plurality of movement combinations in accordance with the movements corresponding to first to sixth direction inputs from a reference position in a radial direction to minimize an input space and to rapidly and correctly input desired characters by a series of input operations.

In addition, according to the present invention, a plurality of direction inputs are combined in a radial direction to be used for various applicable fields such as 3D graphic and map works.

### Brief Description of the Drawings

The objects, features and advantages of the present invention will be more apparent from the following detailed description in conjunction with the accompanying drawings, in which:
FIG. 1 is a block diagram illustrating a data input device according to the present invention;
FIG. 2 is a view illustrating first to fourth direction inputs according to the present invention;
FIG. 3 is a view illustrating examples of combinations of two direction inputs;
FIG. 4 is a view illustrating an example of a character input in accordance with a combination of the two direction inputs;
FIG. 5 is a view illustrating examples of combinations of three direction inputs;
FIG. 6 is a view illustrating examples of inputs in all radial directions;
FIG. 7 is a block diagram illustrating an embodiment of combinations of four direction inputs and extension of a character-board display unit; and
FIG. 8 is a view illustrating an example of a method of inputting characters by activating predicted words.

### Detailed Descriptions of the Invention

Hereinafter, embodiments of the present invention will be described in detail with reference to the accompanying drawings.

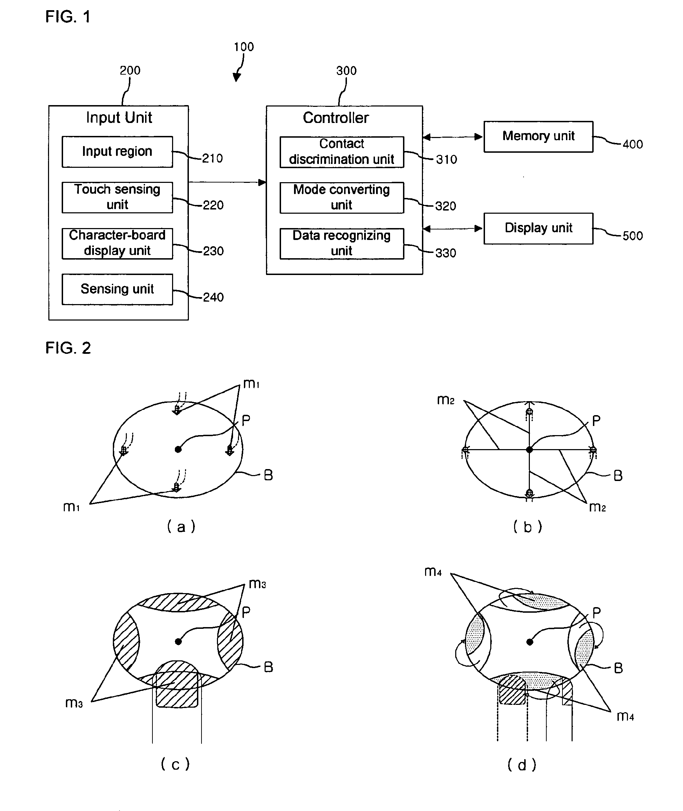

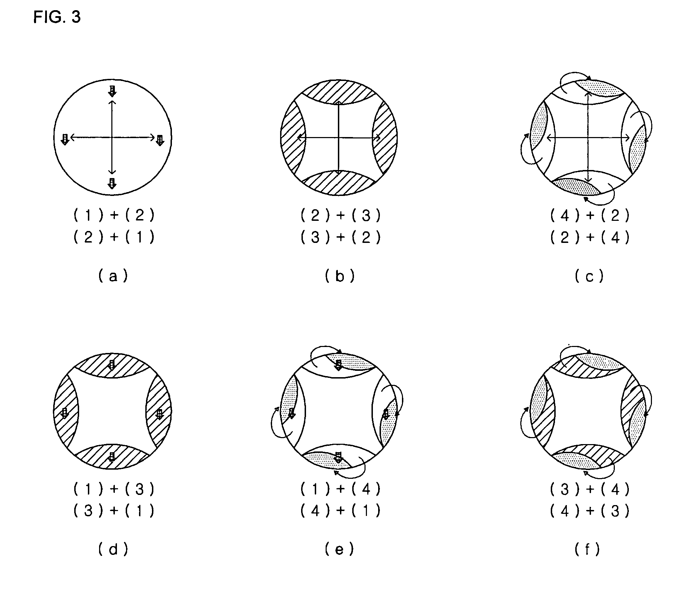

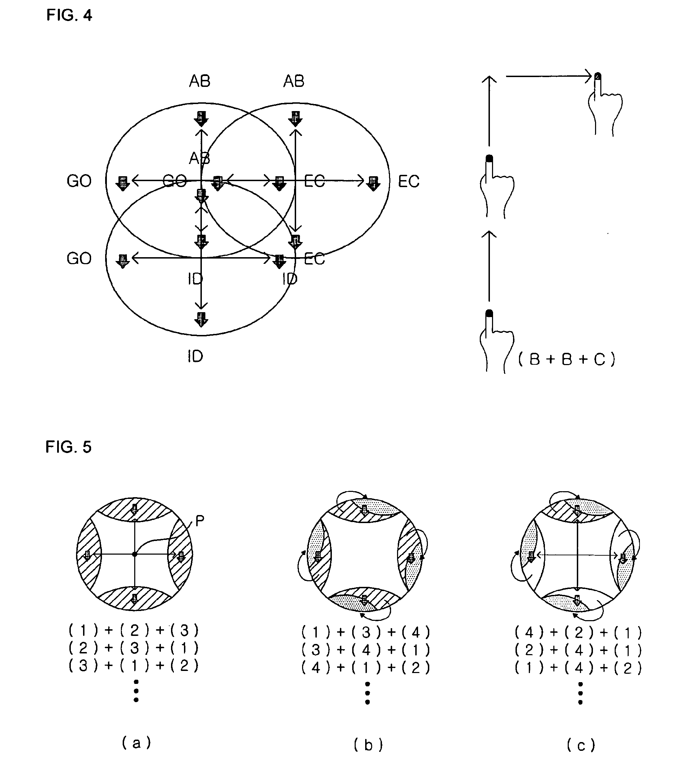

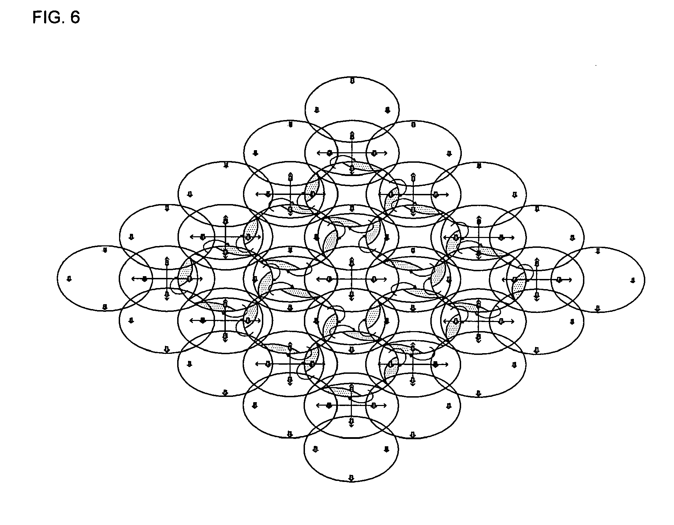

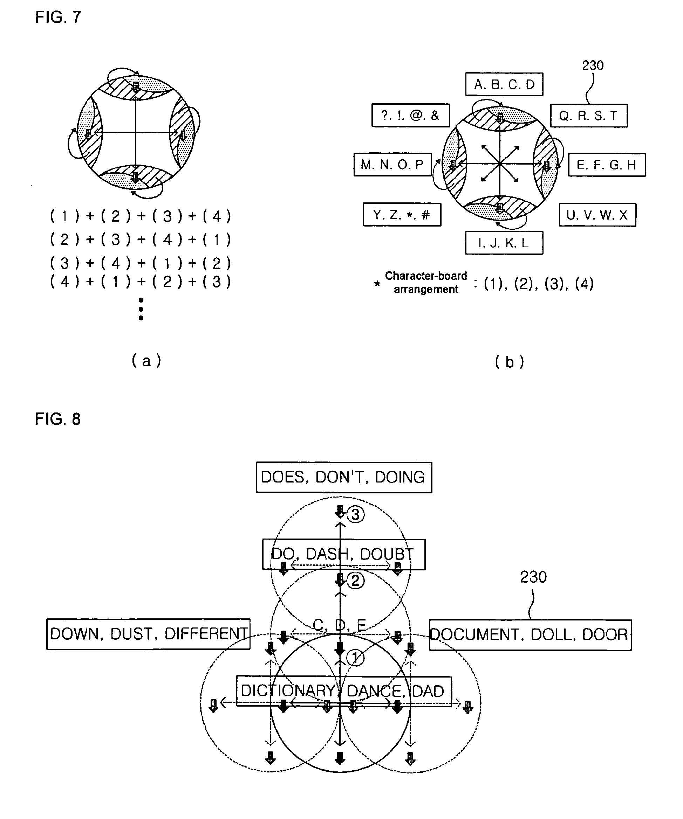

FIG. 1 is a block diagram illustrating a data input device according to the present invention. FIG. 2 is a view illustrating first to fourth direction inputs according to the present invention. FIG. 3 is a view illustrating examples of combinations of two direction inputs. FIG. 4 is a view illustrating an example of a character input in accordance with a combination of the two direction inputs. FIG. 5 is a view illustrating examples of combinations of three direction inputs. FIG. 6 is a view illustrating examples of extensions of inputs in all radial directions. FIG. 7 is a block diagram illustrating an embodiment of combinations of four direction inputs and extension of a character-board display unit. FIG. 8 is a view illustrating an example of a method of inputting characters by activating predicted words.

First, the constitution of a data input device 100 according to the present invention is described with reference to FIG. 1. The data input device 100 comprises an input unit 200 including an input region of a uniform range and a character-board display unit for inputting set data in accordance with the contacts of fingers and a plurality of movements in the input region, a memory unit 400 for storing a data list in order to generate data to correspond to the contacts and the movements, a controller 300 for extracting data in the position assigned by the memory unit 400 from the data list in accordance with the input signal of the input unit 200, and a display unit 500 for displaying the extracted data on the outside.

The input unit 200 includes an input region 210 that is a predetermined space region in which a finger of a user moves and a touch sensing unit 220 mounted to correspond to the input region 210. Here, the input region 210 may be various spaces such as a liquid crystal display (LCD) window, a touch screen, and a touch pad in a portable terminal.

The touch sensing unit 220 for sensing the contact and touch operations of a user can be formed of all types of applicable sensors such as a pressure sensor, an optical sensor, a thermal sensor, a magnetic sensor, and a touch sensor. A capacitive touch sensing technology, a resistive touch sensing technology, and a supersonic surface touch sensing technology may be applied to a sensing method.

A reference position is changed if necessary according to a movement path in accordance with the touch operation of the user and a character-board display unit 230 generated on a screen is further included.

The memory unit 400 stores a plurality of programs (for example, a touch discrimination program and a mode converting program) required for the operations of the portable terminal and a data list, etc.

The controller 300 includes a contact discrimination unit 310, a mode converting unit 320, and a data recognizing unit 330 and controls the entire operations of the portable terminal in accordance with data input processes. In this case, the contact discrimination unit 310 prepares to input data in accordance with the signal sensed by the touch sensing unit 220, the mode converting unit 320 converts the signal into recognizable data such as a character, a number, and a symbol, and the data recognizing unit 330 completes a preparing process of displaying the mode converted data.

In this case, the memory unit 400 and the controller 300 drive various information including the data and programs and the data that underwent the above processes are displayed on the screen so that the user can recognize the data.

Hereinafter, a method of inputting data using a touch method by the data input device 100 having the above constitution will be described in detail with reference to the accompanying drawings.

In the method of inputting data by the touch method according to the present invention, the touch operation basically uses six methods. As illustrated in FIG. 2, the touch method data input according to the present invention can be divided into first to sixth direction inputs. The first to sixth direction inputs will be described as follows, respectively.

In the first direction input, one of a plurality of first direction indicating positions m1 spaced and arranged from a reference position P in a radial direction is selected and pressed within an input radius of a uniform range (refer to (a) of FIG. 2). That is, the first direction input means pressing the first direction indicating positions respectively by a finger.

In the second direction input, one of a plurality of second direction indicating positions m2 spaced and arranged from the reference position P in a radial direction is pressed with movement thereto (refer to (b) of FIG. 2). At this time, pressure is applied in a horizontal direction. In the second direction input, movement is made toward one of the second direction indicating positions together with the pressure.

In the third direction input, one of a plurality of third direction indicating positions m3 spaced and arranged from the reference position P in a radial direction is pressed in a state where a finger contacts the input region (refer to (c) of FIG. 2). The third direction input is different from the first direction input in that, the first direction indicating positions are pressed, respectively, in the first direction input, however, one of the third direction indicating positions is pressed in the state where the finger contacts the input region in the third direction input. At this time, in the third direction input whether which third direction indicating position is pressed is grasped by various methods such as a method of grasping which position is pressed based on the contact area or position of the finger, a method of grasping that the contact area or position is changed from the initial contact area of the finger to a predetermined direction indicating position, or a method of grasping an input direction by pressing a pressing position (the third direction indicating position) in the contact area of the finger.

In the fourth direction input, inclination (of the finger) is made to one of a plurality of fourth direction indicating positions m4 spaced and arranged from the reference position P in a radial direction in the state where the finger contacts the input region (refer to (d) of FIG. 2). At this time, whether the fourth direction input is performed on which fourth direction indicating position can be grasped by various methods such as a method of grasping the inclination direction position based on the contact area or position of the finger, a method of grasping that the contact area or position is changed from the initial contact area of the finger to a predetermined direction indicating position, or a method of grasping an input direction by the inclination to an inclining position (the fourth direction indicating position) in the contact area of the finger.

In addition, although not shown, in the fifth direction input, movement is made to the plurality of second direction indicating positions spaced and arranged from the reference position in a radial direction so that the position of a finger moves to one of the second direction indicating positions in a state where the finger contacts the input region.

In the sixth direction input, inclination pressure is diagonally applied to the plurality of fourth direction indicating positions spaced and arranged from the reference position in a radial direction.

Here, the four directions from the reference position P in a radial direction are set. However, the present invention is not limited to the four directions but two to eight directions from the reference position P may be set.

Predetermined data are displayed by a sensing unit 240 for sensing operations by the respective direction inputs. At this time, the sensing unit can be formed of a common contact sensor such as the pressure sensor, the touch sensor, and an electrostatic capacity sensor. The sensing method and material thereof are not limited.

On the other hand, in the following detailed description, the first direction indicating position m1 means the input position in the radial input region in which a pressure operation by the first direction input can be performed.

The second direction indicating position m2 means the input position in the radial input region in which the pressure movement by the second direction input or the contact movement by the fifth direction input can be performed.

The third direction indicating position m3 means the input position in the radial input region in which the contact pressure input operation by the third direction input can be performed.

The fourth direction indicating position m4 means the input position in the radial input region in which the contact inclining operation by the fourth direction input or the pressure inclining operation by the sixth direction input can be performed.

At this time, in the radial input region, in the radial four directions, each of the first to fourth direction indicating positions m1 to m4 has four directions. In radial six directions or eight directions, each of the first to fourth direction indicating positions m1 to m4 has six or eight directions.

Hereinafter, various embodiments of inputting data using the above-described first to fourth direction inputs will be described in detail with reference to the accompanying drawings.

### (Embodiment 1: a combination of two direction inputs)

The number of combinations of the two direction inputs selected from the first to sixth direction inputs can be 15. That is, the 15 combinations are the combination of the first direction input and the second direction input, the combination of the first direction input and the third direction input, the combination of the first direction input and the fourth direction input, the combination of the first direction input and the fifth direction input, the combination of the first direction input and the sixth direction input, the combination of the second direction input and the third direction input, the combination of the second direction input and the fourth direction input, the combination of the second direction input and the fifth direction input, the combination of the second direction input and the sixth direction input, the combination of the third direction input and the fourth direction input, the combination of the third direction input and the fifth direction input, the combination of the third direction input and the sixth direction input, the combination of the fourth direction input and the fifth direction input, the combination of the fourth direction input and the sixth direction input, and the combination of the fifth direction input and the sixth direction input.

Several combinations among the above combinations will be described as follows with reference to FIG. 3.

FIG. 3 shows the method (refer to (a) of FIG. 3) of making movement while applying pressure (that is, pressure movement) in accordance with the second direction input after pressing one of the first direction indicating positions in accordance with the first direction input, the method (refer to (b) of FIG. 3) of performing the contact pressing operation in accordance with the third direction input after the pressure movement in accordance with the second direction input, the method (refer to (c) of FIG. 3) of performing the contact inclining operation in accordance with the fourth direction input after the pressure movement in accordance with the second direction input, the method (refer to (d) of FIG. 3) of performing the contact pressure operation in accordance with the third direction input after pressing one of the first direction indicating positions in accordance with the first direction input, the method (refer to (e) of FIG. 3) of performing the contact inclining operation in accordance with the fourth direction input after performing the pressing operation in accordance with the first direction input, and the method (refer to (f) of FIG. 3) of performing the contact inclining operation in accordance with the fourth direction input after the contact pressing operation in accordance with the third direction input.

Nine combinations other than the above combinations may further exist. Various applications similar to the above methods can be performed in the operations of a finger or the structure of the contact region. It is apparent that all of the contents in the art be covered based on the following claims. In this case, the inputs are sequentially performed. However, the inputs can be continuously performed by changing the input operations in the input region and by extending the input region.

The reference position is not determined and the direction positions of the direction inputs can be grasped using the position at which the finger is positioned in the input region as a reference position. At this time, when the direction inputs are performed, since the reference position moves in accordance with the direction inputs so that direction positions are grasped based on the point of time at which the inputs are completed or the point of time at which the inputs newly start, continuous inputs can be performed.

### (Embodiment 2: extension of combinations of two direction inputs)

In this case, the input radius region is extended in the combinations of the two direction inputs performed in the embodiment 1. In this case, the movement position of a finger in accordance with a specific direction input from the reference position P in a radial direction becomes a new reference position again so that one of the direction inputs is extended in a radial direction. Therefore, since the number of direction inputs is six, the number of cases of 36 is generated by the combinations of the two direction inputs.

### (Embodiment 3: formation of a character-board display unit in the combination of the two direction inputs)

As illustrated in FIG. 4, when pressure movement in accordance with the second direction input is made, a character-board display unit follows up (or keeps track of) the movement, which is for easily performing a series of continuous data input operations by the extension of a display region. Therefore, input of two phonemes can be easily performed by one operation.

For example, in FIG. 4, in order to continuously input B, pressure movement (the second direction input) is made in the direction of 12 o'clock and pressure movement (the second direction input) of 12 o'clock is made using the moved position as a reference position. At this time, in order to input C in addition, pressure movement (the second direction input) is performed in the direction of 3 o'clock. In FIG. 4, the orbit of the finger movement is illustrated.

In addition, the character-board display unit can be made following-up (or tracing) in the direction where the direction inputs are performed or the character-board display unit can be made newly formed at the point of time where the specific direction input is completed or at the point of time where the specific direction input newly starts. Therefore, the user grasps the data that can be input in accordance with each of the direction inputs displayed by the character-board display unit to continuously perform the direction inputs.

That is, the character-board display unit on which the data that can be input by the first direction input and the second direction input are displayed is formed based on the first direction input or the second direction input to perform the first direction input or the second direction input as illustrated in the drawing. Other than this case, the combination input such as the first direction input and the third direction input, the second direction input and the fourth direction input, or the second direction input and the fifth direction input can be made.

In this case, each of the direction inputs is sequentially performed. However, the input operation is changed in the input region to continuously perform inputs and inputs can be continuously performed by extending the input region.

### (Embodiment 4: extension of a touch operation: one operation is performed and another operation is continuously performed)

FIG. 5 illustrates a case in which data can be input using three direction inputs among the first to fourth direction inputs. In this case, after a specific direction input, the direction input can be performed again. One is selected among the plurality of direction indicating positions to perform the first to sixth direction input operations and to complete a first movement. Then, another is selected among the direction indicating positions to perform the first to sixth direction input operation and to complete a second movement. Then, an input operation can be performed by the same method.

That is, as illustrated in (a) of FIG. 5, data can be continuously input using various combinations such as the first direction input→ the second direction input→ the third direction input, the second direction input→ the third direction input→ the first direction input, and the third direction input→ the first direction input→ the second direction input.

By the same method, data may be input as illustrated in (b) and (c) of FIG. 5.

At this time, it is preferable that the character-board display units corresponding to the number of cases of the method of performing an input through an input path be formed.

In this case, since the reference position is changed in the direction of a finger during an input so that the extension of a region by the distance of a radius is generated based on a radial input range diameter in a process of extending input data and that a data input can be easily performed by a minimized portable electronic apparatus having a narrow input area.

In addition, the direction inputs are sequentially performed. However, the input operation in the input region can be changed to continuously perform input operations and an input can be continuously performed by extending the input region.

### (Embodiment 5: extension of the touch operation: extension of an input direction)

As illustrated in FIG. 6, the first to sixth direction inputs are applied from the reference position so that the number of cases of continuously inputting data is very large. Therefore, the user can easily continuously input desired data.

### (Embodiment 6: extension of the touch operation: multi-step input)

The number of cases in accordance with the direction inputs can be extended in the above embodiments. However, the extension of the character-board is limited. Therefore, a character-board extending embodiment will be described with reference to FIG. 7.

Where the four radial directions, that is, the first to fourth direction indicating positions are set one by one in each direction, the character-boards are arranged in accordance with the four input methods corresponding to the direction indicating positions. Therefore, since phonemes that can be input are limited to 16 phonemes, when the input directions are extended to six or eight radial directions, extension to 24 or 32 phonemes can be allowed. Therefore, an English or Korean text input can be performed.

In addition, as an embodiment of a multi-step input method, various methods such as a change in a movement distance, a difference in a pressure strength, and limitations on a rotation radius may be used. When the input method is used, extension from 12 or 16 character-boards in a conventional input method to 24 or 32 character-boards can be made. In this case, the entire inputs can be performed in multi-step. However, after performing one (movement or pressure) of the three direction inputs when combining the three direction inputs, four data inputs can be performed in each of the other direction inputs. That is, when the extension of radial arrangement or the difference in the input methods is applied, phonemes or symbols required for the user to input data can be procured.

The two input character-boards may be provided. In this case, an additional character-board display unit is formed by Hangeul or English so that text can be input.

### (Embodiment 7: input by activating predicted words)

FIG. 8 illustrates a method of a user conveniently inputting data by activating predicted words using a character-board according to still another embodiment.

In detail, when upward movement is made from the reference position P, D of a predetermined character-board is input. When two to four words are arranged in a radial direction from the upward moved position as a new reference position, eight to sixteen words can be selected. In this case, it is preferable that the words be set based on the words having a high frequency.

In the drawing, three words are arranged, respectively, in each of radial directions. That is, when 12 o'clock direction is selected among the second direction indicating positions and the pressure movement that is the second direction input is performed so that D is selected (①), the English words starting with D are formed on the character-board display unit in four radial directions. Therefore, when the user further performs one among the first to third direction inputs, that is, when the pressure input operation that is the first direction input is performed (②) to 12 o'clock direction as shown in Fig. 8, the English words DO are selected. When the verb such as DO is selected, the progressive form, the past form, and the comparative form, etc. of it can be selected. In the case of a noun, a process of extending a selected word in which a synonym can be additionally selected can be performed. That is, after performing the input operation (②), when the pressure movement that is the second direction input is performed (③) to the 12 o'clock direction, DON'T can be selected. When the pressure operation that is the first direction input is performed (③) in the 12 o'clock direction, DOES can be input.

In this case, the user can previously set words having a high frequency so that the convenience of the user can be maximized.

Although not shown, the embodiment can be applied to the input of a Hangeul text other than the English alphabets.

### (Embodiment 8: extension to a three dimensional graphic or mapping work)

When the plurality of direction indicating positions and the plurality of direction inputs are used, not only the data input work such as characters but also three dimensional graphic work, the map work using the same, or the use as game indicating buttons during a game can be performed.

### (Embodiment 9: application to a mouse pointer or a character movement)

When the reference position is determined in the input region such as the touch pad, while data is being input by the third direction input in accordance with the contact pressure and the second direction input in accordance with the pressure movement, the fifth direction input in accordance with the contact movement can be used as the pointer movement of the mouse. In this case, when the sensing unit senses the fifth direction input, instead of inputting the data according to the fifth direction input, the direction in which the fifth direction input is performed is grasped as the movement direction of the mouse. At this time, when the third direction input by the contact pressure is performed on the left or right during performing the fifth direction input, the left or right button function of the mouse can be performed.

On the other hand, when the reference position is not determined, the operation similar to the above can be performed. In this case, the reference position is not determined so that the pointer movement of the mouse can be performed by the fifth direction input while performing the data input at an arbitrary point of the input region.

Through the fifth direction input, the movement of characters (or objects) or a drag operation can be performed.

In addition, the above operation can be performed in the touch pad formed of the touch sensor, etc.

According to the present embodiment, the mouse pointer movement, the character movement, and the drag operation are performed by the third direction input, the second direction input, and the fifth direction input. However, the above operations may be performed using the other direction inputs.

The portable terminal including the data input device and the inputting method according to the present invention were described through the embodiments. While this invention has been particularly shown and described with reference to preferred embodiments thereof, these embodiments are provided so that this disclosure will be thorough and complete, and will fully convey the concept of the invention to those skilled in the art. It will be understood by those skilled in the art that various changes in form and details may be made therein without departing from the scope of the invention as defined by the appended claims.

## Claims

1. A data input device realized in a touch pad or a touch screen of a portable electronic apparatus, comprising:
a base;
an input region provided in a part of the base;
a memory unit for storing a data list in order to generate data to correspond to contact and movement operations of a finger in the input region; and
a controller for extracting corresponding data from the data list in the memory unit in accordance with an input signal in an input unit,
wherein, in the input region, at least two inputs among a first direction input of pressing one of a plurality of first direction indicating positions spaced and arranged in a radial direction from a reference position, a second direction input of moving to one of a plurality of second direction indicating positions spaced and arranged in a radial direction from the reference position, a third direction input of pressing one of a plurality of third direction indicating positions spaced and arranged in a radial direction from the reference position in a state where a finger contacts the input region, and a fourth direction input of making inclination toward one of a plurality of fourth direction indicating positions spaced and arranged in a radial direction from the reference position in a state where the finger contacts the input region can be independently or sequentially performed,
wherein the data input device further comprises a sensing unit for respectively sensing the at least two direction inputs to transmit the sensing signal to the controller, and
wherein the at least two direction inputs are combined to input data.

2. The data input device of claim 1, wherein a combination of the first direction input and the second direction input is performed.

3. The data input device of claim 1, wherein a combination of the second direction input and the third direction input is performed.

4. The data input device of claim 1, wherein a combination of the second direction input and the fourth direction input is performed.

5. The data input device of claim 1, wherein a combination of the first direction input and the third direction input is performed.

6. The data input device of claim 1, wherein a combination of the first direction input and the fourth direction input is performed.

7. The data input device of claim 1, wherein a combination of the third direction input and the fourth direction input is performed.

8. The data input device of claim 1, further comprising a character-board display unit on which data to be input is displayed in accordance with the direction input in the input region.

9. The data input device of claim 8, wherein, when any direction input is performed, at the point where the direction input is completed, using the completed point as a reference position, the character-board display unit is re-activated (displayed) so that one of the first to fourth direction inputs can be continuously performed.

10. The data input device of claim 1, the radial input region of forming an input radius is formed of two to eight directions around a reference position.

11. The data input device of anyone of claims 1 to 10, wherein, when one of the first to fourth direction inputs is performed, a structure of a character-board display unit can be changed in accordance with a change in movement distance, a change in pressure strength, or a change in pressure displacement so that a multi-step input can be performed.

12. The data input device of anyone of claims 1 to 10, wherein a character-board display unit for displaying an English word or a Hangeul word having a high use frequency is formed in accordance with continuously inputting character arrangement.
